# EUROPEAN PATENT APPLICATION

(11) **EP 2 923 584 A1**
(43) Date of publication of application: **30.09.2015**
(21) Application number: 15160257.0
(22) Date of filing: 23.03.2015
(51) Int. Cl.: A23L 2/60, A23L 1/09, A23L 1/22, A23L 1/222, A23L 1/226, A23L 1/236

(54) **Naringenin and salts thereof for sweetness enhancement**

(30) Priority: 27.03.2014 US 201461970977 P
(71) Applicant: INTERNATIONAL FLAVORS & FRAGRANCES INC., New York New York 10019 (US)
(72) Inventor: Thumpalasseril, John V., Morganville, New Jersey 07751 (US); Hsi-Wen, Chin, Tinton Falls, New Jersey 07724 (US); Jung-A, Kim, Edgewater, New Jersey 07020 (US)
(74) Representative: Lawrence, John

(57) **Abstract**

The use of naringenin and a salt thereof to enhance the sweetness of a sweetness modifier and to decrease the amount of a sweetness modifier used in a consumable is provided.

## Description

### Status of Related Application

This application claims priority to U.S. Provisional Patent Application No. 61/970,977, filed March 27, 2014, the contents hereby incorporated by reference as if set forth in its entirety.

### Background of Invention

Reducing sugar content in food and beverages has become a necessity in the food industry. Food and beverage manufacturers generally use non-caloric, high-intensity sweetness modifiers, such as rebaudioside A (Reb A), aspartame, saccharin, glycosylated steviol glycosides, etc., to partially or completely replace sugar. However, these sweetness modifiers may exhibit undesirable taste attributes such as delayed onset of sweetness, bitter and astringent aftertaste, and lack of body and mouthfeel. Consequently, sweet taste modulators have become valuable tools, which optimize the use of sweetness modifiers, in achieving the desired sweetness intensity and mouthfeel with reduced off-taste.

Sweetness enhancers have been described in the prior art. For example, WO 2013/143822 teaches the use of adenosine as sweetness enhancer for certain sugars; EP 2606747 describes the use of deoxycholic acid or a derivative thereof for enhancing the sweetness of consumables; WO 2013/077668 describes the sweetness enhancing effect of a glycan or glycopeptide derived from soy sauce; WO 2012/107203 teaches the use of nobiletin or a derivative or a hydrate thereof as a sweetener or sweetness enhancer; WO 2009/023975 describes the use of iso-mogroside V as a sweetener and sweetness enhancer; US 2008/0242740 teaches aroma compositions of alkamides with hesperetin and/or 4-hydroxydihydrochalcones for enhancing sweet sensory impressions; and WO 2007/014879 and WO 2007/107596 respectively teach the use of hesperetin and 4-hydroxydihydrochalcones for enhancing the sweet taste of a sweet-tasting substance or sweet olfactory impression of a flavoring.

### Summary of the Invention

This invention provides a method of enhancing the sweetness of a sweetness modifier by adding an olfactory effective amount of naringenin or a salt thereof. In certain embodiments, the olfactory effective amount ranges from about 50 to about 1000 ppm, preferably from about 75 to about 750 ppm, and more preferably from about 100 to about 500 ppm by weight.

A consumable includes, for example, a food product (e.g., a beverage), a sweetener such as a natural sweetener or an artificial sweetener, a pharmaceutical composition, a dietary supplement, a nutraceutical, a dental hygienic composition and a cosmetic product. The consumable may further contain a flavoring.

A natural sweetener of this invention includes, for example, but not limited to, sucrose, fructose, glucose, high fructose corn syrup, *Stevia rebaudiana* compositions including pure components of Reb A, stevioside, and rebaudioside D (Reb D), xylose, arabinose, or rhamnose, as well as sugar alcohols such as erythritol, xylitol, mannitol, sorbitol, inositol and a combination thereof. An artificial sweetener of this invention includes, for example, but not limited to, aspartame, sucralose, neotame, acesulfame potassium, saccharin and a combination thereof.

A flavoring is a preparation that provides a consumable with a particular taste and/or smell. A flavoring with modifying properties is a subset of the flavoring. It is added to the consumable to reduce off-notes and/or improve overall profile. The flavorings with modifying properties of the present invention include, for example, but not limited to, a stevia composition including stevioside, steviolbioside Reb A, rebaudioside B (Reb B), rebaudioside C (Reb C), Reb D, rebaudioside E (Reb E), rebaudioside F (Reb F), dulcoside A, dulcoside B, rubusoside, alpha-glucosyl stevia, fructosyl stevia, galactosyl stevia, beta-glucosyl stevia, siamenoside, mogrosidc IV, mogroside V, Luo Han Guo, monatin, glycyrrhizic acid, thaumatin, a salt thereof, a glycosylated derivative thereof and a combination thereof. The glycosylated derivatives can be prepared via transglycosylation reactions with, for example, but not limited to, glucose, fructose, galactose, rhamnose, ribose, mannose, arabinose, fucose, maltose, lactose, sucrose, rutinose, sorbose, xylulose, ribulose, rhammulose and xylose. In one embodiment, the flavorings with modifying properties of the present invention include Reb A, Reb C, rubusoside, Reb D, mogroside V, Luo Han Guo, monatin acid, a salt thereof, a glycosylated derivative thereof and a combination thereof. The flavorings with modifying properties of the present invention exhibit weak intrinsic sweetness. Some other flavorings of the present invention include, for example, but not limited to, curculin, monellin, mabinlin, brazzein, hernandulcin, phyllodulcin, glycyphyllin, phloridzin, trilobtain, baiyunoside, osladin, polypodoside A, pterocaryoside A, pterocaryoside B, mukurozioside, phlomisoside I, periandrin I, abrusoside A, cyclocarioside I and a combination thereof.

Accordingly, the term "a sweetness modifier" of the present invention refers to a sweetener including a natural sweetener and an artificial sweetener or a flavoring with modifying properties set forth in the above.

### Detailed Description of the Invention

Naringenin, a naturally occurring substance known to exhibit antioxidative activities (Heo, et al. (2004) J. Agricul. Food Chem. 52(6):1520-1525), itself has a relatively bland taste, exhibiting only a weak to no sweet taste. Naringenin has been largely used as a pharmaceutical agent in health care (*See,* U.S. Patent No.s 4,297,348, 6,096,364 and 8,846,351). Its possible use in food industry has long been explored but remains controversial. Earlier report discloses it as an aftertaste modifier that decreases the perception of bitterness or undesirable flavor (*See,* U.S. Publication No. 2009/0004360). However, more recent and more detailed studies show that naringenin, tested up to a concentration of 10 ppm, exhibits bitterness and unpleasant aftertaste, and performs poorly on flavor (*See,* U.S. Publication No. 2014/0170082). It has now been found unexpectedly that when used at concentrations ranging from about 50 to about 1000 ppm, naringenin enhances the sweetness of sweetness modifiers without undesirable off-notes. Accordingly, the present invention provides methods of using naringenin or a salt thereof at specific levels to enhance the sweetness of a sweetness modifier and decrease the amount of a sweetness modifier used in a consumable.

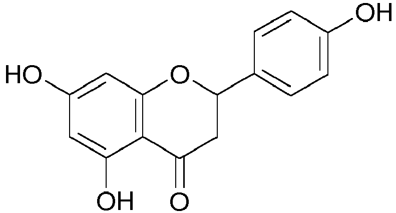

### Naringenin

### (2,3-dihydro-5,7-dihydroxy-2-(4-hydroxyphenyl)-4H-1-benzopyran-4-one)

Naringenin of the present invention can be a single stereoisomer (2S-naringenin or 2R-naringenin), a stereoisomer mixture, a salt of a single stereoisomer, a salt of a stereoisomer mixture or a mixture thereof. Further, naringenin of the present invention can be an isolated and purified form or a botanical extract. For example, isolated and purified naringenin can be obtained by synthetic methods; by de novo production, e.g., in *Saccharomyces cerevisiae* (Koopman, et al. (2012) Microbial Cell Factorizes 11:155); or from commercial sources (e.g., Sigma-Aldrich).

If provided as a botanical extract, preferably the extract is enriched for naringenin to achieve a content of about 15% and greater, for example, from about 15% to about 95%, from about 60% to about 95% or from about 70% to about 95%. Unless otherwise specified, percentages (% s) are by weight. Naringenin botanical extracts can be obtained by conventional methods from various plant sources including, for example, but not limited to, tomato (Yoshimura, et al. (2007) Allergol. Int. 56:225-230), citrus such as *Citrus aurantium, C. grandis, C. junos* or *C. paradisi* (Heo, et al. (2004) Dement. Geriatr. Cogn. Discord. 17:151-157; Coffin (1971) J. Agr. Food Chem. 19:513) or *Mentha aquatica* L. (Olsen, et al. (2008) J. Ethnopharmacol. 117:500-2); or from commercial sources such as *Xiamen JieJing Biology Technology Co., Ltd* (Xiamen, China), which provides a naringenin extract from *Citrus paradisi* Macfadyen. Extracts containing naringin or naringenin-7-glucoside (glycosidic forms of naringenin) can be treated via chemical or biological methods to release the aglycone using, e.g., acid hydrolysis (Pulley & von Loesecke (1939) J. Am. Chem. Soc. 61:175) or enzymatic hydrolysis (Ferreira, et al. (2008) Food Technol. Biotechnol. 46:146-150; Thomas, et al. (2006) J. Food Sci. 23:591-98).

Naringenin is soluble in ethanol, ether, oils (e.g., olive oil or citrus oil) and supercritical carbon dioxide and is sparingly soluble in aqueous solutions. Accordingly, in some embodiments, the naringenin is provided as a water-soluble salt. Salts include base addition salts which may be formed when acidic protons present are capable of reacting with inorganic or organic bases. Acceptable inorganic bases include, for example, but not limited to, sodium hydroxide, sodium carbonate, potassium hydroxide, aluminum hydroxide and calcium hydroxide. Acceptable organic bases include, for example, but not limited to, ethanolamine, diethanolamine, triethanolamine, tromethamine, N-methylglucamine and the like. Salts of naringenin can be prepared by conventional methods or can be obtained commercially. For example, a water-soluble potassium salt of naringenin is provided by Natrafu SA (Alcantarilla, Spain). The naringenin of the present invention is naringenin, a naringenin salt or a combination thereof. Water-soluble naringenin-amino acid esters (Kim, et al. (2005) Bull. Korenn Chem. Soc. 26:2065) or naringenin in complex with hydroxypropyl-β-cyclodextrin (Wen, et al. (2010) Molecules 15:4401-7; 2011/0312985) are also within the scope of this invention.

The term "sweetness" or "sweetness intensity" is understood to mean the relative strength of sweet sensation as observed or experienced by an individual, e.g., a human, or a degree or amount of sweetness detected by a taster, for example on the scale from 0 (none) to 8 (very strong) used in sensory evaluations according to the procedure described in American Society for Testing Materials, Special Technical Publication-434: "Manual on Sensory Testing Methods," ASTM International, West Conshohocken, PA. (1996).

The term "olfactory effective amount" is understood to mean the amount of naringenin used in a combination with a sweetness modifier, wherein naringenin enhances the sweetness of the sweetness modifier. Its olfactory effective amount may vary depending on many factors including other ingredients, their relative amounts and the olfactory effect that is desired. Any amount of naringenin that provides the desired degree of sweetness enhancement without exhibiting off-taste can be used. In certain embodiments, the olfactory effective amount ranges from about 50 to about 1000 ppm, preferably from about 75 to about 750 ppm and more preferably from about 100 to 500 ppm by weight. The term "ppm" is understood to mean part per million by weight.

In some embodiments, a consumable is a food product including, for example, but not limited to, fruits, vegetables, juices, meat products such as ham, bacon and sausage, egg products, fruit concentrates, gelatins and gelatin-like products such as jams, jellies, preserves and the like, milk products such as ice cream, sour cream and sherbet, icings, syrups including molasses, corn, wheat, rye, soybean, oat, rice and barley products, nut meats and nut products, cakes, cookies, confectionaries such as candies, gums, fruit flavored drops, and chocolates, chewing gums, mints, creams, pies and breads. In a certain embodiment, the food product is a beverage including, for example, but not limited to, coffee, tea, carbonated soft drinks, such as COKE and PEPSI, non-carbonated soft drinks and other fruit drinks, sports drinks such as GATORADE and alcoholic beverages such as beers, wines and liquors. A consumable also includes prepared packaged products, such as granulated flavor mixes, which upon reconstitution with water provide non-carbonated drinks, instant pudding mixes, instant coffee and tea, coffee whiteners, malted milk mixes, pet foods, livestock feed, tobacco, and materials for baking applications, such as powdered baking mixes for the preparation of breads, cookies, cakes, pancakes, donuts and the like. A consumable also includes diet or low-calorie food and beverages containing little or no sucrose. A preferred consumable includes carbonated beverages. Consumables further include condiments such as herbs, spices and seasonings, flavor enhancers (e.g., monosodium glutamate), dietetic sweeteners and liquid sweeteners.

In other embodiments, a consumable is a pharmaceutical composition, a dietary supplement, a nutraceutical, a dental hygienic composition or a cosmetic product. Preferred compositions are pharmaceutical compositions containing naringenin, one or more pharmaceutically acceptable excipients, and one or more active agents that exert a biological effect other than sweetness enhancement. Such active agents include pharmaceutical and biological agents that have an activity other than taste enhancement. Such active agents are well known in the art (*See,* e.g., The Physician's Desk Reference). Such compositions can be prepared according to procedures known in the art, for example, as described in Remington's Pharmaceutical Sciences, Mack Publishing Co., Easton, PA. In one embodiment, such an active agent includes a bronchodilator, an anorexiant, an antihistamine, a nutritional supplement, a laxative, an analgesic, an anesthetic, an antacid, a H2-receptor antagonist, an anticholinergic, an antidiarrheal, a demulcent, an antitussive, an antinauseant, an antimicrobial, an antibacterial, an antifungal, an antiviral, an expectorant, an anti-inflammatory agent, an antipyretic and a mixture thereof. In another embodiment, the active agent is selected from the group consisting of an antipyretic and analgesic, e.g., ibuprofen, acetaminophen or aspirin, a laxative, e.g., phenolphthalein dioctyl sodium sulfosuccinate, an appetite depressant, e.g., an amphetamine, phenylpropanolamine, phenylpropanolamine hydrochloride, or caffeine, an antacid, e.g., calcium carbonate, an antiasthmatic, e.g., theophylline, an antidiarrheal, e.g., diphenoxylate hydrochloride, an agent against flatulence, e.g., simethecon, a migraine agent, e.g., ergotamine tartrate, a psychopharmacological agent, e.g., haloperidol, a spasmolytic or sedative, e.g., phenobarbital, an antihyperkinetic, e.g., methyldopa or methylphenidate, a tranquilizer, e.g., a benzodiazepine, hydroxyzine, meprobramate or phenothiazine, an antihistaminic, e.g., astemizol, chlorpheniramine maleate, pyridamine maleate, doxlamine succinate, brompheniramine maleate, phenyltoloxamine citrate, chlorcyclizine hydrochloride, pheniramine maleate, or phenindamine tartrate, a decongestant, e.g., phenylpropanolamine hydrochloride, phenylephrine hydrochloride, pseudoephedrine hydrochloride, pseudoephedrine sulfate, phenylpropanolamine bitartrate, or ephedrine, a beta-receptor blocker, e.g., propranolol, an agent for alcohol withdrawal, e.g., disulfuram, an antitussive, e.g., benzocaine, dextromethorphan, dextromethorphan hydrobromide, noscapine, carbetapentane citrate, and chlophedianol hydrochloride, a fluorine supplement, e.g., sodium fluoride, a local antibiotic, e.g., tetracycline or clindamycin, a corticosteroid supplement, e.g., prednisone or prednisolone; an agent against gout, e.g., colchicine or allopurinol, an antiepileptic, e.g., phenytoin sodium, an agent against dehydration, e.g., electrolyte supplements, an antiseptic, e.g., cetylpyridinium chloride, a NSAID, e.g., acetaminophen, ibuprofen, naproxen, or a salt thereof, a gastrointestinal active agent, e.g., loperamide and famotidine, an alkaloid, e.g., codeine phosphate, codeine sulfate, or morphine, a supplement for trace elements, e.g., sodium chloride, zinc chloride, calcium carbonate, magnesium oxide, and other alkali metal salts and alkali earth metal salts; a vitamin, an ion-exchange resin, e.g., cholestyramine, a cholesterol-depressant and lipid-lowering substance, an antiarrhythmic, e.g., N-acetylprocainamide and an expectorant, e.g., guaifenesin. Examples of dietary supplements or nutraceuticals include, for example, but are not limited to, an enteral nutrition product for treatment of nutritional deficit, trauma, surgery, Crohn's disease, renal disease, hypertension, obesity and the like, to promote athletic performance, muscle enhancement or general well-being or inborn errors of metabolism such as phenylketonuria. In particular, such compositions can contain one or more amino acids which have a bitter or metallic taste or aftertaste. Such amino acids include, for example, but are not limited to, an essential amino acid such as L isomers of leucine, isoleucine, histidine, lysine, methionine, phenylalanine, threonine, tryptophan, tyrosine and valine. Dental hygienic compositions are known in the art and include, for example, but not limited to, a toothpaste, a mouthwash, a plaque rinse, a dental floss, a dental pain reliever (such as ANBESOL) and the like. In one embodiment, the dental hygienic composition includes one natural sweetener. In another embodiment, the dental hygienic composition includes more than one natural sweetener. In yet another embodiment, the dental hygienic composition includes sucrose and corn syrup, or sucrose and aspartame. A cosmetic product includes, for example, but not limited to, a face cream, a lipstick, a lip gloss and the like. Other suitable cosmetic products of use in this invention include a lip balm, such as CHAPSTICK or BURT'S BEESWAX Lip Balm.

In addition, the present invention also provides methods for enhancing the sweetness of a flavoring with modifying properties and decreasing its use level in a consumable by incorporating naringenin or a salt thereof. In some embodiments, the flavoring with modifying properties and naringenin or a salt thereof are used at a 1:1, 2:1, 3:1 or 4:1 ratio. In one embodiment, the invention provides a consumable containing an olfactory effective amount of naringenin or a salt thereof and a flavoring with modifying properties in a reduced amount in order to achieve the same level of sweetness when the flavoring with modifying properties is used alone in a traditional amount. In this respect, the amount of flavoring with modifying properties used in a consumable can be reduced by at least about 10%, 20%, 30%, 40%, 50%, 60%, 70%, 80%, 90%, or 95%, from about 60% to about 99% or from about 20% to about 50%.

As indicated, naringenin or a salt thereof can be used in a consumable as a sweetness enhancer, which retains a desired sweetness but contains lower amounts of a natural sweetener or an artificial sweetener. For example, an improved carbonated soft drink can be produced with the same sweetness as the known carbonated soft drink but with lower sugar content by adding naringenin.

Additional materials can also be used in conjunction with naringenin of the present invention to encapsulate and/or deliver the flavor enhancement. Some well-known materials are, for example, but not limited to, polymers, oligomers, other non-polymers such as surfactants, emulsifiers, lipids including fats, waxes and phospholipids, organic oils, mineral oils, petrolatum, natural oils, perfume fixatives, fibers, starches, sugars and solid surface materials such as zeolite and silica.

The invention is described in greater detail by the following non-limiting examples. Materials were purchased from Aldrich Chemical Company unless noted otherwise.

### Example I: Enhancement of Sucrose Sweetness

Sucrose solutions of different concentrations were prepared in water. A naringenin (AuNutra Industries Inc) solution was also prepared in water (100 ppm) and used in all of the following examples.

Each test group contained 26 paired samples. In each paired samples, a sucrose solution of a higher concentration was compared for sweetness against that of a lower concentration but in combination with naringenin. The results were represented by the numbers of samples rated as sweeter in paired comparisons, which were then statistically analyzed using binomial distribution for two-sided comparisons at 95% confidence level. The evaluation is reported in the following:

| **Solution** | **Number of Samples Rated Sweeter** | **p Value** |
|---|---|---|
| Sucrose (0.5%) | 10 | 0.40 |
| Naringenin | 16 | |
| Sucrose (4.4%) | 6 | 0.01* |
| Sucrose (4%) + Naringenin | 20 | |
| Sucrose (4.8%) | 14 | > 0.40 |
| Sucrose (4%) + Naringenin | 12 | |

| | | |
|---|---|---|
| * Significant difference in sweetness. | | |

Naringenin exhibited a weak intrinsic sweetness that was at an approximate level of a 0.5% sucrose solution. However, when used in combination with a 4% sucrose solution, naringenin enhanced the sweetness to a level of a 4.8% sucrose solution. Such enhancement was more than an additive effect. Thus, the enhancement of sucrose sweetness by naringenin was significant and unexpected.

### Example II: Enhancement of Reb A Sweetness

Reb A solutions of different concentrations were prepared in water and the sweetness enhancement by naringenin was similarly evaluated.

| **Solution** | **Number of Samples Rated Sweeter** | **p Value** |
|---|---|---|
| Reb A (120 ppm) | 5 | 0.01* |
| Reb A (120 ppm) + Naringenin | 21 | |
| 140 ppm Reb A | 19 | 0.05^{*} |
| 100 ppm Reb A + Naringenin | 7 | |

| | | |
|---|---|---|
| * Significant difference in sweetness. | | |

As shown in the above, naringenin significantly enhanced Reb A sweetness. However, the enhancement was less than that provided by an additional 40 ppm of Reb A.

### Example III: Sweetness Enhancement of Sucrose & Reb A Combination

The sweetness enhancement of sucrose & Reb A combination by naringenin was also evaluated.

| **Solution** | **Number of Samples Rated Sweeter** | **p Value** |
|---|---|---|
| Reb A (20 ppm) + Sucrose (4%) | 6 | 0.01* |
| Reb A (10 ppm) + Sucrose (4%) + Naringenin | 20 | |
| Reb A (30 ppm) + Sucrose (4%) | 9 | 0.20 |
| Reb A (10 ppm) + Sucrose (4%) + Naringenin | 17 | |

| | | |
|---|---|---|
| * Significant difference in sweetness. | | |

As shown in the above, naringenin significantly enhanced the sweetness of sucrose & Reb A combination. The enhancement was greater than that achieved by 20 ppm Reb A.

### Example IV: Sweetness Enhancement of Artificial Sweeteners

In addition, the sweetness enhancement of (i) sucralose (40 ppm), (ii) aspartame (120 ppm) and (iii) acesulfame potassium (120 ppm) by naringenin was also evaluated, respectively. In all test groups, naringenin enhanced sweetness with an impact up front.

### Example V: Enhancement of Sucrose Sweetness by Naringenin of Different Concentrations

A Danone Non-Fat Plain Yogurt with 5% sucrose was prepared and used as the base. Different amount of naringenin was added to the base to obtain naringenin samples of a series of concentrations ranging from 10 to 1000 ppm.

| **Sample** | **Naringenin (ppm)** | **Flavor Profile** |
|---|---|---|
| 1 | 0 (Base) | Mild in sweet perception |
| 2 | 10 | Same as the base |
| 3 | 50 | Minor increase in sweet ness |
| 4 | 75 | Slightly more increase in sweetness |
| 5 | 100 | Clear increase in sweetness |
| 6 | 250 | More intense and full-body sweetness |
| 7 | 500 | Full-body sweetness with good impact |
| 8 | 750 | Intense sweetness with noticeable waxy and chalky notes |
| 9 | 1000 | Intense sweetness with waxy, chalky and slightly bitter notes |

The above evaluation yielded unexpected finding. Samples 3-9 showed sweetness enhancement of sucrose by naringenin. However, there was criticality to the concentrations of naringenin. Specifically, only at a concentration of 50 ppm and greater, naringenin exhibited sweetness enhancement. Undesirable off-notes developed at a concentration of 1000 ppm. Thus, the present invention has made surprising and unexpected discovery of the use of naringenin in sweetness enhancement and of the criticality of its use levels.

### Example VI: Enhancement of Reb A Sweetness by Naringenin of Different Concentrations

A Reb A water solution (10 ppm) was prepared and used as the base. Different amount of naringenin was added to the base to obtain naringenin samples of a series of concentrations ranging from 10 to 1000 ppm.

| **Sample** | **Naringenin (ppm)** | **Flavor Profile** |
|---|---|---|
| 1 | 0 (Base) | Mild in sweet perception |
| 2 | 10 | Same as that of the base |
| 3 | 50 | Very minor increase in sweet ness |
| 4 | 75 | Slightly more increase in sweetness |
| 5 | 100 | Clear increase in sweetness with an impact up front |
| 6 | 250 | Intense sweetness with a stronger impact up front |
| 7 | 500 | Intense sweetness with a strong impact up front and noticeable waxy and chalky notes |
| 8 | 750 | More intense sweetness with increased waxy and chalky notes |
| 9 | 1000 | Similar to that of Sample 8 |

The above evaluation also yielded unexpected finding. Samples 3-9 showed sweetness enhancement of Reb A by naringenin. Similarly, only at a concentration of 50 ppm and greater, naringenin exhibited sweetness enhancement. However, undesirable off-notes developed at 750 ppm.

## Claims

1. A method of enhancing the sweetness of a sweetness modifier comprising the step of adding an olfactory effective amount of naringenin, a salt thereof or a combination thereof.

2. A combination of a sweetness modifier and an olfactory effective amount of naringenin.

3. The method of claim 1 or the combination of claim 2, wherein the sweetness modifier is a sweetener.

4. The method or combination of claim 3, wherein the sweetener is a natural sweetener selected from the group consisting of sucrose, fructose, glucose, high fructose corn syrup, rebaudioside A, stevioside, rebaudioside D, xylose, arabinose, rhamnose, erythritol, xylitol, mannitol, sorbitol, inositol and a combination thereof.

5. The method or combination of claim 3, wherein the sweetener is an artificial sweetener selected from the group consisting of aspartame, sucralose, neotame, acesulfame potassium, saccharin and a combination thereof.

6. The method or combination of claim 3, wherein the sweetness modifier is a flavoring with modifying properties selected from the group consisting of stevioside, steviolbioside rebaudioside A, rebaudioside B, rebaudioside C, rebaudioside D, rebaudioside E, rebaudioside F, dulcoside A, dulcoside B, rubusoside, alpha-glucosyl stevia, fructosyl stevia, galactosyl stevia, beta-glucosyl stevia, siamenoside, mogrosidc IV, mogroside V, Luo Han Guo, monatin, glycyrrhizic acid, thaumatin, a salt thereof, a glycosylated derivative thereof and a combination thereof.

7. The method or combination of claim 6, wherein the flavoring with modifying properties is selected from the group consisting of rebaudioside A, rebaudioside C, rubusoside, rebaudioside D, mogroside V, Luo Han Guo, glycyrrhizic acid, a salt thereof, a glycosylated derivative thereof and a combination thereof.

8. The method of claim 1, or any of claims 3 to 7, or the combination of claim 2 or of any of claims 3 to 7, wherein the olfactory effective amount is from about 50 to about 1000 ppm.

9. The method of claim 1, or any of claims 3 to 7, or the combination of claim 2 or of any of claims 3 to 7, wherein the olfactory effective amount is from about 75 to about 750 ppm.

10. The method of claim 1, or any of claims 3 to 7, or the combination of claim 2 or of any of claims 3 to 7,wherein the olfactory effective amount is from about 100 to about 500 ppm.

11. A consumable comprising a combination of a sweetness modifier and an olfactory effective amount of naringenin.

12. The consumable of claim 11, wherein the sweetness modifier is a flavoring with modifying properties selected from the group consisting of rebaudioside A, rebaudioside C, rubusoside, rebaudioside D, mogroside V, Luo Han Guo, glycyrrhizic acid, a salt thereof, a glycosylated derivative thereof and a combination thereof and the olfactory effective amount is from about 50 to about 1000 ppm.
